# EUROPEAN PATENT SPECIFICATION

(11) **EP 1 471 500 B1**
(45) Date of publication and mention of the grant of the patent: **23.07.2008**
(21) Application number: 04009694.3
(22) Date of filing: 23.04.2004
(51) Int. Cl.: G10L 15/20

(54) **System and method for speech recognition using models adapted to actual noise conditions**
Vorrichtung und Verfahren für Spracherkennung mit Modellen, die an die aktuellen Geräuschbedingungen adaptiert werden
Dispositif et méthode de reconnaissance de parole utilisant des modèles adaptés aux conditions véritables de bruit

(30) Priority: 25.04.2003 JP 2003121948
(43) Date of publication of application: 27.10.2004
(73) Proprietor: Pioneer Corporation, Meguro-ku, Tokyo (JP)
(72) Inventor: Seo, Hiroshi c/o Sougoukenkyusho Pioneer Corp., Tsurugashima-shi, Saitama-ken 350-2288 (JP); Toyama, Soichi c/o Sougoukenkyusho Pioneer Corp., Tsurugashima-shi, Saitama-ken 350-2288 (JP)
(74) Representative: Sajda, Wolf E.

(56) References cited:
- EP-A- 1 148 741
- EP-A- 1 189 205
- US-B1- 6 418 411

## Description

### BACKGROUND OF THE INVENTION

The present invention relates to a system and a method for speech recognition which are improved in robustness to service environmental effects.

On particular, the invention relates to a system once a method as defined in the preambles of claims 1 and 10. Such a system and method are known from EP-A-1 189 205.

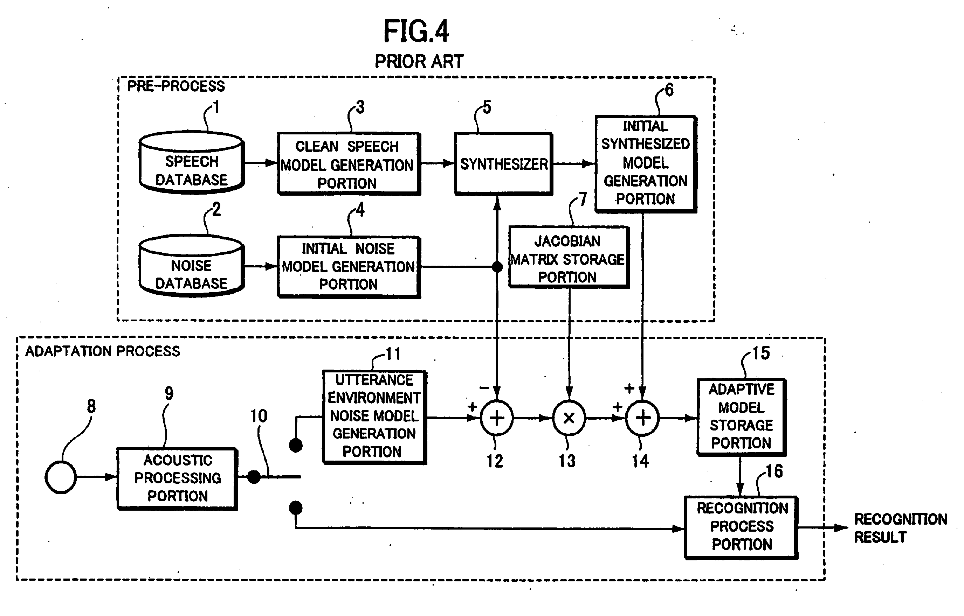

Fig. 4 is a block diagram illustrating the configuration of a conventional speech recognition system that was developed to remove the effect of background noise. For example, see JP-A-9-81183 for a speech recognition system that employs the conventional hidden Markov model (HMM).

An exemplary conventional speech recognition system includes a clean speech database 1 and a noise database 2, which are prepared in a pre-process. The system also includes a clean speech model generation portion 3 for generating sub-word by sub-word clean speech models such as phonemes or syllables from the clean speech database by learning for storage, and an initial noise model generation portion 4 for generating initial noise models from the noise database 2 for storage.

The speech recognition system further includes a synthesizer 5 for combining a clean speech model and a noise model, and an initial synthesized model generation portion 6 for generating an initial synthesized model, on which pre-estimated noise is superimposed, for storage. Furthermore, the system includes a Jacobian matrix generation portion 7 for generating Jacobian matrices for storage.

In an adaptive process to actually perform speech recognition, speech data delivered from a microphone 8 is supplied to an acoustic processing portion 9 to perform cepstrum conversion on the speech data in each predetermined frame period and thereby output a sequence of cepstrum domain feature vectors. The system is provided with a changeover switch 10, which is controlled by control means such as a microcomputer (not shown), to switch to a recognition process portion 16 during utterance and to an utterance environment noise model generation portion 11 during no utterance.

The utterance environment noise model generation portion 11 generates an utterance environment noise model using a portion with no utterance having been generated yet. A subtractor 12 determines the difference between an average vector of the utterance environment noise model and an average vector of the initial noise model, allowing a multiplier 13 to multiply the Jacobian matrix corresponding to each initial synthesized model obtained in the pre-process by the output from the subtractor 12. Then, an adder 14 adds the average vector of the initial synthesized model delivered from the initial synthesized model generation portion 6 to the output from the multiplier 13. The resulting output from the adder 14 is stored in an adaptive model storage portion 15 as the average vector of an adaptive model. For invariant model parameters such as a state transition probability or a mixture ratio, parameters of the initial synthesized model are stored without being changed in the adaptive model storage portion 15 as adaptive model parameters.

An utterance initiated by a speaker into the microphone 8 causes the acoustic processing portion 9 to process the input voice to generate in real time a sequence of feature vectors in each predetermined frame period. Then, the recognition process portion 16 checks the sequence of feature vectors against a sequence of models, corresponding to words or sentences to be recognized, which is generated by combining adaptive models. The recognition process portion 16 then outputs, as a recognition result (RGC), a sequence of sub-words corresponding to the sequence of models that provides the maximum likelihood to the sequence of feature vectors. The recognition process portion 16 may also provide a recognition result taking a linguistic likelihood provided by a linguistic model into account.

As described above, the aforementioned conventional speech recognition system produces a noise model having a pre-estimated utterance environment and an initial synthesized model to adapt the initial synthesized model using the difference between an utterance environment noise model obtained under an actual service environment and the initial noise model, thereby producing an adaptive model used to recognize an input voice.

However, speech recognition performed under an actual service environment would result in an adaptive model which is obtained through adaptation using only the output from the subtractor 12 without considering the difference in level between the clean speech, from which the clean speech model is derived, and the voice of the speaker. Accordingly, a significant difference may result between the adaptive model and the sequence of feature vectors generated from the uttered voice including background noise. This raised a problem that the recognition process portion 16 could not perform recognition with high accuracy even when the adaptive model was checked against the sequence of feature vectors of an input voice.

### SUMMARY OF THE INVENTION

The present invention was developed in view of these conventional problems. It is therefore an object of the present invention to provide a system and a method for speech recognition which are improved in robustness to service environmental effects.

The object underlying the present invention is solved by a speech recognition system and a speech recognition method as defined in claims 1 and 10, respectively. Further developments of the speech recognition system and the speech recognition method according to the invention are specified in the sub-claims.

To achieve the aforementioned object, a speech recognition system according to the present invention includes an initial noise model produced based on pre-estimated noise of a service environment, a clean speech model of noiseless speech, and an initial synthesized model produced by combining the initial noise model and the clean speech model. The speech recognition system is intended for producing an utterance environment noise model from background noise of the service environment upon speech recognition as well as for producing a sequence of feature vectors from noise-superimposed speech including an uttered voice and the background noise. The system is also intended for producing an adaptive model by adapting the initial synthesized model using the utterance environment noise model and the initial noise model, and for checking the adaptive model against the sequence of feature vectors to perform speech recognition. The speech recognition system comprises compensation means for providing compensation in accordance with the sequence of feature vectors upon producing the adaptive model.

To achieve the aforementioned object, a speech recognition method according to the present invention comprises the steps of providing an initial noise model produced based on pre-estimated noise of a service environment, a clean speech model of noiseless speech, and an initial synthesized model produced by combining the initial noise model and the clean speech model, producing an utterance environment noise model from background noise of the service environment upon speech recognition as well as producing a sequence of feature vectors from noise-superimposed speech including an uttered voice and the background noise. The method also includes the steps of producing an adaptive model by adapting the initial synthesized model using the utterance environment noise model and the initial noise model, and checking the adaptive model against the sequence of feature vectors to perform speech recognition. The method is characterized in that the step of producing the adaptive model includes the step of providing compensation in accordance with the sequence of feature vectors.

### BRIEF DESCRIPTION OF THE DRAWINGS

These and other objects and advantages of the present invention will become clear from the following description with reference to the accompanying drawings, wherein:
Fig. 1 is an explanatory block diagram illustrating the configuration of a speech recognition system according to the present invention;
Fig. 2 is a block diagram illustrating the configuration of the speech recognition system according to the present invention, which is divided into each group of pre-process and adaptation process;
Fig. 3 is a detailed block diagram illustrating the configuration of a compensation vector generation portion of Fig. 2; and
Fig. 4 is a block diagram illustrating the configuration of a conventional speech recognition system.

### DETAILED DESCRIPTION OF THE PREFERRED EMBODIMENTS

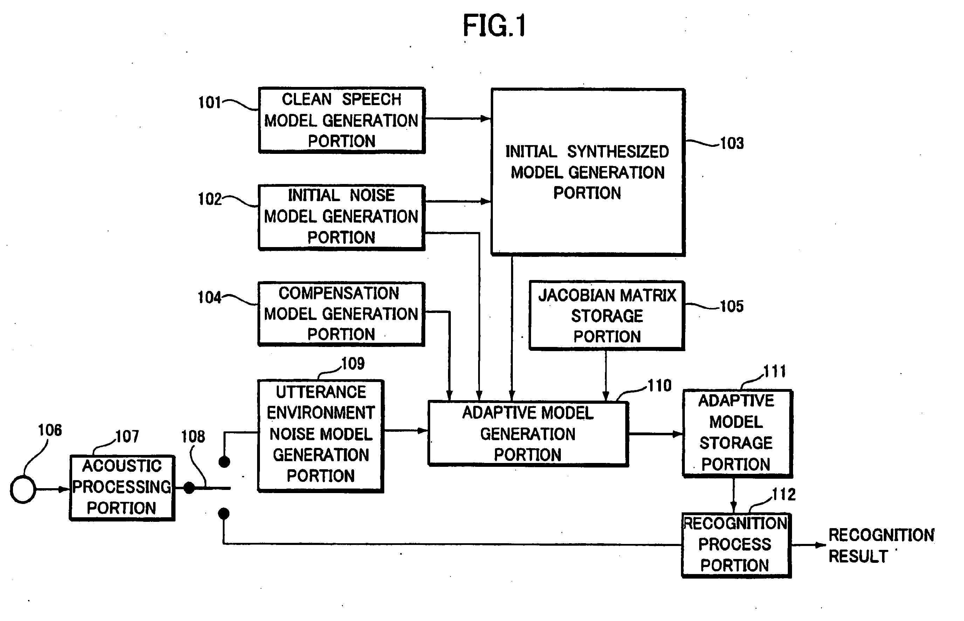

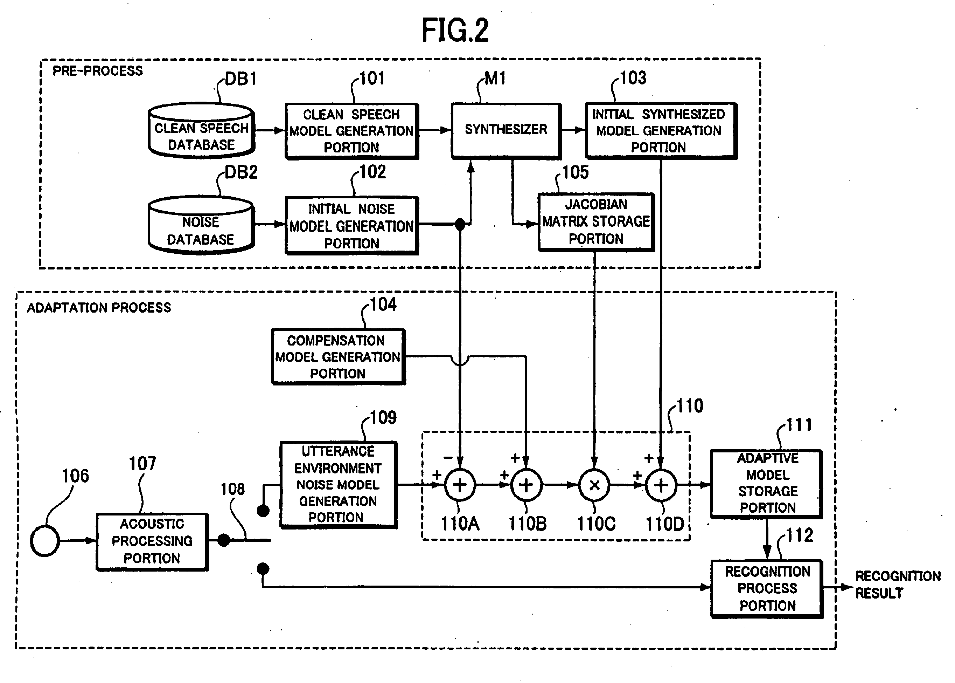

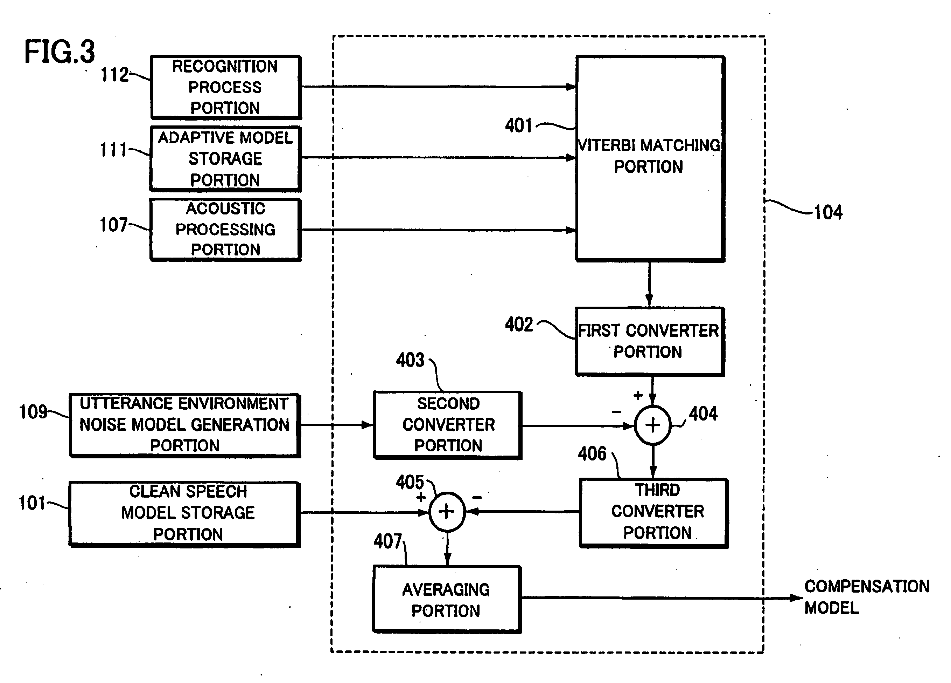

Now, the present invention will be described below in more detail with reference to the accompanying drawings in accordance with the embodiment. Fig. 1 is an explanatory block diagram illustrating the configuration of the present invention. Figs. 2 and 3 are block diagrams illustrating all and a part of the configuration of a speech recognition system according to the embodiment, respectively.

First, referring to Fig. 1, the structural feature of the present invention will be described.

The system includes a compensation model generation portion 104, for generating compensation models, which outputs a compensation model for providing compensation based on a sequence of feature vectors, discussed later, upon generating an adaptive model.

In accordance with the compensation model, compensation is provided so as to make the signal to noise ratio of the adaptive model equal to that of the sequence of feature vectors. This enables generation of an adaptive vector which is robust to service environmental effects.

Referring to Fig. 1, a clean speech model generation portion 101 and an initial noise model generation portion 102 store a number of sub-word by sub-word clean speech models such as phonemes or syllables generated in the pre-process and initial noise models having pre-estimated service environmental noise, respectively. Furthermore, an initial synthesized model generation portion 103 stores a number of sub-word by sub-word initial synthesized models generated by combining the clean speech models and the initial noise models in the pre-process.

Speech data delivered from a microphone 106 is supplied to an acoustic processing portion 107, in which the speech data is converted to a sequence of cepstrum domain feature vectors in each predetermined frame period and the resulting sequence of cepstrum domain feature vectors are delivered. The system is provided with a changeover switch 108, which is controlled by control means such as a microcomputer (not shown), to switch to a recognition process portion 112 during utterance and to an utterance environment noise model generation portion 109 during no utterance.

The utterance environment noise model generation portion 109 generates an utterance environment noise model using a portion with no utterance having been generated yet. Anadaptivemodelgeneration portion 110 generates an adaptive model, for output to an adaptive model storage portion 111, in accordance with the utterance environment noise model, a compensation model delivered from the compensation model generation portion 104, an initial noise model delivered from the initial noise model generation portion 102, an output from a Jacobian matrix storage portion 105, and an initial synthesized model delivered from the initial synthesized model generation portion 103. The adaptive model storage portion 111 stores adaptive models.

Although not illustrated, the compensation model generation portion is supplied with a recognition result (RGC) from the recognition process portion 112, an output from the adaptive model generation portion 110, an output from the acoustic processing portion 107, an output from the utterance environment noise model generation portion 109, and an output from the clean speech model generation portion 101. As detailed later, the compensation model generation portion 104 generates a compensation model for use with operational processing to be performed so as to make the signal to noise ratio of the adaptive model generated at the adaptive model generation portion 110 using each of these models equal to that of the sequence of feature vectors of an input voice. The adaptive model generation portion 110 performs compensation processing on the initial synthesized model using the compensation model, thereby generating an adaptive model having a compensated signal to noise ratio.

An utterance initiated by a speaker into the microphone 106 causes the acoustic processing portion 107 to process the input voice to generate in real time a sequence of feature vectors in each predetermined frame period. Then, the recognition process portion 112 checks the sequence of feature vectors against a sequence of models, corresponding to words or sentences to be recognized, which is generated by combining the adaptive models in the adaptive model storage portion 111 . The recognition process portion 112 then outputs, as a recognition result (RGC), a sequence of sub-words corresponding to the sequence of models that provides the maximum likelihood to the sequence of feature vectors. The recognition process portion 112 may also take a linguistic likelihood provided by a linguistic model into account to derive the recognition result.

As described above, the system includes the compensation model generation portion 104 for making the signal to noise ratio between the speech signal and background noise of an adaptive model equal to that of a sequence of feature vectors, the adaptive model and the sequence of feature vectors being checked against each other at the recognition process portion 112. Consequently, for example, even when different magnitudes of voices are uttered by a speaker, this configuration implements speech recognition which is robust to service environmental effects, and particularly to the effect of background noise, thereby performing speech recognition with improved accuracy.

Now, referring to Figs. 2 and 3, a speech recognition system according to this embodiment will be described below. In Figs. 1 to 3, the same reference numerals designate the same or similar parts.

Referring to Fig. 2, the speech recognition system according to the present invention includes the Jacobian matrix storage portion 105 for storing so-called Jacobian matrix data, in addition to the clean speech model generation portion 101, the initial noise model generation portion 102, the initial synthesized model generation portion 103, and the adaptive model storage portion 111.

The system is provided with a clean speech database DB1 of a large amount of clean speech data used for preparing clean speech models. The system is also provided with a noise database DB2 of noises matched to the pre-estimated environment.

The system is further provided with a large number of sub-word by sub-word clean speech models generated from each piece of speech data by learning or the like and initial noise models generated from the noise data. The clean speech models and the noise models are stored in the clean speech model generation portion 101 and the initial noise model generation portion 102, respectively.

Furthermore, the clean speech models and the noise models are each combined in a synthesizer M1 to generate initial synthesized models, which are pre-stored in the initial synthesized model generation portion 103.

The Jacobian matrix storage portion 105 has Jacobian matrix data pre-stored therein corresponding to the average vector of each initial synthesized model, discussed earlier. The Jacobian matrix is a matrix of first order differential coefficients that can be obtained by using the Taylor's polynomials to expand the variation in the average vector of each initial synthesized model with respect to the variation in the average vector of the background noise model relative to the average vector of the initial noise model.

As detailed later, the system generates an adaptive model using the Jacobian matrix data, thereby significantly reducing the amount of operations for generating the adaptive model to perform speech recognition at high speeds.

The utterance environment noise model generation portion 109, the acoustic processing portion 107, the changeover switch 108, the recognition process portion 112, the compensation model generation portion 104, the adaptive model storage portion 111, and the adaptive model generation portion 110 use a microprocessor (MPU) or the like having operational functions to execute pre-set system programs upon performing adaptive process for actual speech recognition, thereby making use of each processing portion or generation portions 104, 107, 109, 110, 111, and 112.

The acoustic processing portion 107 delivers a sequence of feature vectors obtained corresponding to an input voice from the microphone 106 including background noise. The sequence of feature vectors is delivered in sync with a pre-set analysis frame.

The utterance environment noise model generation portion 109 processes the sequence of feature vectors during no utterance to generate an utterance environment noise model.

The adaptive model generation portion 110 includes a subtractor 110A, an adder 110B, a multiplier 110C, and an adder 110D to generate an adaptive model.

As illustrated, the subtractor 110A and the adder 110B perform additions or subtractions on the average vectors of the utterance environment noise model, the initial noise model, and the compensation model, while the multiplier 110C multiplies the resulting addition or subtraction by the Jacobian matrix data to generate a quantity corresponding to a noise adaptive component of the average vector of the initial synthesized model. Furthermore, the adder 110D adds the average vector of the initial synthesized model itself to the quantity corresponding to the noise adaptive component of the average vector of the initial synthesized model, thereby generating the average vector of a compensated adaptive model. For invariant model parameters such as a state transition probability or a mixture ratio, parameters of the initial synthesized model are stored without being changed in the adaptive model storage portion 111 as adaptive model parameters.

The compensation model delivered from the compensation model generation portion 104 compensates for the difference between the signal to noise ratio of the adaptive model noise to the uttered voice and that of the background noise to the uttered voice, the difference resulting from the magnitude of the voice constituting the speech data stored in the clean speech database DB1 being different from the actual magnitude of the voice uttered by the speaker. This makes it possible for the recognition process portion 112 to perform speech recognition with high accuracy by checking the compensated adaptive model against the sequence of input voice feature vectors. This holds true even in the presence of a great difference between an adaptive model and the sequence of feature vectors generated from an uttered voice containing background noise.

As a typical example, take a noise present in the passenger room of a car. In the presence of the same level of noise, a speaker may utter a small voice and another speaker may utter a loud voice at different signal to noise ratios resulting in variations therebetween. However, the aforementioned compensation vector can be used to prevent such a difference between utterance conditions or the like from having an adverse effect on the accuracy of recognition.

In other words, in the presence of the same level of noise, the speaker uttering a loud voice provides a high signal to noise ratio between the noise and the speaker's voice, whereas the speaker uttering a small voice provides a low signal to noise ratio between thenoiseand the speaker's voice. Generally, the speech recognition system cannot compensate the magnitude of a speaker's voice, and thus has to employ the same adaptive model for the same noise. This presumably has an adverse effect on the accuracy of recognition. However, the compensated adaptive model according to the present invention can be used to prevent variations in the accuracy of recognition resulting from different magnitudes of voices.

Now, referring to Fig. 3, the configuration of the compensation model generation portion 104 will be described below.

In the figure, the compensation model generation portion 104 includes a Viterbi matching portion 401, first and second converter portions 402, 403 for converting cepstrum domain vectors to linear spectrum domain vectors, a third converter portion 406 for converting linear spectrum domain vectors to cepstrum domain vectors, a first subtractor 404 for performing subtraction on linear spectrum domain vectors, a second subtractor 405 for performing subtraction on cepstrum domain vectors, and an averaging portion 407.

First, the Viterbi matching portion 401 is supplied with the latest recognition result (RGC) delivered from the recognition process portion 112 as well as with the adaptive model used upon speech recognition and the sequence of feature vectors of the input voice to be recognized (the output from the acoustic processing portion 107).

Then, the Viterbi matching portion 401 associates the adaptive model corresponding to a vowel or the like contained in the recognition result (RGC) from the recognition process portion 112 with the sequence of feature vectors from the acoustic processing portion 107 in each analysis frame, thereby allowing a series of feature vectors of the frame corresponding to the feature vector of the vowel to be delivered from the sequence of feature vectors to the first converter portion 402.

The first converter portion 402 converts the sequence of cepstrum domain feature vectors to a sequence of linear spectrum domain vectors for output to the first subtractor 404.

The second converter portion 403 converts the average vector of the cepstrum domain utterance environment noise model supplied from the utterance environment noise model generation portion 109 to an average vector of the linear spectrum domain utterance environment noise model for output.

The first subtractor 404 performs a subtraction on the sequence of converted linear spectrum domain feature vectors, as mentioned above, and the average vector of the similarly converted linear spectrum domain utterance environment noise model, thereby generating a sequence of differential feature vectors having background noise subtracted therefrom.

The third converter portion 406 converts the sequence of the linear spectrum domain differential feature vectors to a cepstrum domain sequence, and the sequence of differential feature vectors, or a sequence of feature vectors fromwhichtheeffectof the utterance environment noise has been removed, is supplied to the second subtractor 405.

Then, the second subtractor 405 performs a subtraction on the clean speech model corresponding to the vowel contained in the recognition result (RGC) and the differential feature vector, thereby generating a cepstrum domain pre-compensated vector for output to the averaging portion 407.

The averaging portion 407 holds a plurality of pre-compensated vectors that are generated in a certain predetermined period T to determine the average vector and the covariant matrix based on the plurality of pre-compensated vectors, thereby generating a one-state one-mixture compensation model, as described above, for output. In the foregoing, the compensation model is adapted to have an average vector and a covariant matrix, but may also have only the average vector with a zero covariant matrix. Since the compensation of the signal to noise ratio mainly requires only a power term, the compensation model may contain only the power term.

The compensation model delivered from the averaging portion 407 is supplied to the adder 110B of the adaptive model generation portion 110 shown in Fig. 2.

The compensation model generation portion 104 generates a compensation model each time the speaker utters a voice for delivery to the adder 110B. Thus, even when the voice uttered by the speaker varies over time, it is possible to compensate the signal to noise ratio of the noise of the adaptive vector to the uttered voice according to the variation, thereby enabling speech recognition to meet actual service conditions.

Furthermore, the compensation model generation portion 104 shown in Fig. 3 uses the sequence of feature vectors corresponding to a vowel upon generating a compensation model. This makes it possible to process a sequence of larger power feature vectors when compared with the case of consonants.

Accordingly, in this case, unlike the processing of a sequence of feature vectors corresponding to consonants, a compensation model can be produced to which the signal to noise ratio between the background noise present at the time of actual utterance of a voice and the uttered voice is reflected. This makes it possible to compensate the signal to noise ratio between the background noise of the adaptive model and the uttered voice with high accuracy, leading to speech recognition with improved accuracy.

As described above, the speech recognition system according to this embodiment is designed to perform compensation such that the signal to noise ratio of the average vector of the adaptive model is equal to that of the sequence of feature vectors between the uttered voice and the noise. Thus, for example, even when the magnitude of a voice uttered by a speaker is different from that of the voice constituting the speech data in the clean speech database, the system implements speech recognition which is robust to its service environmental effects, thereby performing speech recognition with improved accuracy.

Furthermore, when compared with the conventional speech recognition system, this embodiment implements a speech recognition system which provides improved robustness to its service environmental effects, and particularly to the effect of background noise. For example, this allows for providing an outstanding advantage when speech recognition is performed under a noisy environment typified by the passenger room of a car. The outstanding advantage can be provided by applying the present invention to a vehicle-mounted navigation unit with a speech recognition function by which the user directs a routing to his/her travel destination by voice, for example.

The compensation model generation portion 104 shown in Fig. 3 is configured to extract the sequence of feature vectors corresponding to a vowel with the Viterbi matching portion 401 and then employs the extracted sequence of feature vectors as an analysis model for generating a compensation model. However, the present invention is not necessarily limited to the procedure of generating the compensation model from the sequence of feature vectors corresponding to vowels.

That is, as described above, to compensate the signal to noise ratio between the adaptive vector background noise and the uttered voice with higher accuracy, the compensation vector is desirably generated from the sequence of feature vectors corresponding to a vowel. This makes it possible to implement a speech recognition system which is robust to the effect of background noise or the like. However, when speech recognition is performed under a service environment with less background noise or the like, the compensation model has not necessarily to be generated only based on the sequence of feature vectors corresponding to a vowel, but may also be selected according to an actual service environment or the like.

Thus, to generate a compensation model without being limited to the sequence of feature vectors corresponding to a vowel, the system can be designed such that the Viterbi matching portion 401 shown in Fig. 3 is eliminated and the sequence of feature vectors delivered from the acoustic processing portion 107 is directly supplied to the first converter portion 402 as an analysis model, thereby being simplified in configuration.

Furthermore, the compensation model generation portion 104 shown in Fig. 3 has the averaging portion 407 to generate a compensation model from the additive average of the pre-compensated vectors generated in a predetermined period. However, the present invention is not necessarily limited to the additive average mentioned above, but may also use the pre-compensated model as the compensation model without any change made thereto. An averaging method other than the additive averaging can also be employed.

Furthermore, the compensation model generation portion 104 may also determine a pre-compensated vector for each of different types of vowels (e.g., vowels "a" or "i") for additive averaging of the pre-compensated vectors for each of the vowels generated in a predetermined period.

In more detail, the average of the feature vector for the vowel "a" contained in the sequence of feature vectors may be determined to be employed as an average feature vector (a). Similarly, the Viterbi matching portion 401 may determine an average feature vector (i), an average feature vector (o), and so on. Then, the first converter portion 402, the first subtractor 404, the third converter portion 406, and the second subtractor 405 may be used for the subsequent processing to determine a pre-compensated vector (a), a pre-compensated vector (i), a pre-compensated vector (o), and so on. Then, the averaging portion 407 may average the pre-compensated vector (a), the pre-compensated vector (i), the pre-compensated vector (o), and so on, to output the results as a compensation model.

On the other hand, in this embodiment, such a case has been described in which the speech recognition system is made up of so-called hardware, e.g., integrated circuit devices. However, the same functions of the speech recognition system described above may also be implemented by means of computer programs, which are installed in an electronic device such as a personal computer (PC) to be executed therein.

Furthermore, the compensation model generation portion 104 shown in Fig. 3 allows the first converter portion to convert the sequence of feature vectors to a sequence of linear domain feature vectors, allows the first subtractor 404 to perform subtraction on the average vector of the converted linear domain utterance environment noise model provided at the second converter portion 403 in order to determine a sequence of linear domain differential vectors, and allows the third converter portion 406 to obtain a sequence of differential feature vectors or a sequence of feature vectors having the effect of the cepstrum domain utterance environment noise eliminated for output to the second subtractor 405. However, the compensation model generation portion 104 can also store a time domain input signal obtained at the microphone 106 of Fig. 1 to remove the effect of the utterance environment noise using a known noise removal method such as the spectrum subtraction. Then, a sequence of feature vectors obtained by performing acoustic analysis in each predetermined frame can be supplied to the second subtractor 405 as a sequence of differential feature vectors.

Furthermore,theaforementionedcomputerprogram maybestored in an information storage medium such as compact discs (CD) or digital versatile discs (DVD), which is provided to the user, so that the user can install and execute the program in a user's electronic devices such as a personal computer.

## Claims

1. A speech recognition system for performing speech recognition, comprising:
- a clean speech model generation portion (101) for storing a clean speech model of noiseless speech,
- an initial noise model generation portion (102) for storing an initial noise model produced based on pre-estimated noise of a service environment,
- an initial synthesized model generation portion (103) for producing an initial synthesized model by combining the initial noise model and the clean speech model,
- an acoustic processing portion (107) for converting speech data including a noise to a sequence of cepstrum domain feature vectors,
- an utterance environment noise model generation portion (109) for processing the sequence of feature vectors during no utterance to generate an utterance environment noise model,
- an adaptive model generation portion (110) for generating an adaptive model in accordance with the utterance environment noise model, the initial noise model and the initial synthesized model, and
- a recognition process portion (112) for checking the sequence of feature vectors of the speech data against a sequence of feature vectors of the adaptive model and outputting a result of recognition,
**characterized by** compensation means (104) for providing compensation in accordance with the sequence of feature vectors of the speech data upon producing the adaptive model,
- wherein the compensation means (104) provide compensation so as to make a signal to noise ratio of the adaptive model equal to a signal to noise ratio of the sequence of feature vectors of the speech data.

2. The system according to claim 1,
**characterized in that** the compensation means (104) provide compensation in accordance with the sequence of feature vectors, the utterance environment noise model, and the clean speech model.

3. The system according to claim 1,
**characterized in that** the compensation means (104) allow a compensation model for compensating a noise level upon the adaptation to compensate an adaptive parameter calculated using the utterance environment noise model and the initial noise model at the time of the adaptation.

4. The system according to any of clams 1 to 3,
**characterized in that** the compensation means (104) produce:
- a differential vector by determining a difference between the sequence of feature vectors to be checked and the utterance environment noise model; and
- the compensation model by determining a difference between the clean speech model corresponding to the adaptive model to be checked and the differential vector.

5. The system according to any of claims 1 to 4,
**characterized in that** the compensation means (104) produce the compensation model for making a signal to noise ratio of the adaptive model equal to a signal to noise ratio of the sequence of feature vectors.

6. The system according to any of claims 1 to 5,
**characterized in that** the compensation means (104) comprise detection means (401) for detecting a feature vector of a vowel from the sequence of feature vectors to be checked, and produce the differential vector by determining a difference between the feature vector detected by the detection means (401) and the utterance environment noise model, and produce the compensation model by determining a difference between the clean speech model corresponding to the vowel and the differential vector.

7. The system according to any of claims 1 to 5,
**characterized in that** the compensation means (104) comprise detection means (401) for detecting a feature vector having a predetermined power level or more in the sequence of feature vectors to be checked, produce the differential vector by determining a difference between the feature vector detected by the detection means (401) and the utterance environment noise model, and produce the compensation model by determining a difference between the clean speech model corresponding to a feature vector having the predetermined power level or more and the differential vector.

8. The system according to any of claims 1 to 7,
**characterized in that** the compensation means (104) comprise calculation means (407) for determining an average of the compensation models generated in a predetermined period, and deliver an averaged compensation model provided by the calculation means (407).

9. The system according to any of claims 1 to 8,
**characterized in that** the compensation means (104) comprise calculation means (407) for determining an average of a plurality of compensation models determined in accordance with a plurality of uttered voices, and deliver an averaged compensation model provided by the calculation means (407).

10. A speech recognition method comprising the following steps:
- providing an initial noise model produced based on pre-estimated noise of a service environment, a clean speech model of noiseless speech, and an initial synthesized model produced by combining the initial noise model and the clean speech model;
- producing an utterance environment noise model from back ground noise of the service environment upon speech recognition;
- producing a sequence of feature vectors from noise-superimposed speech including an uttered voice and the background noise;
- producing an adaptive model by adapting the initial synthesized model using the utterance environment noise model and the initial noise model; and
- checking the adaptive model against the sequence of feature vectors of the speech, to perform speech recognition,
**characterized in that** the step of producing the adaptive model includes the step of providing compensation in accordance with the sequence of feature vectors of the speech,
and **in that** the compensation makes a signal to noise ratio of the adaptive model equal to a signal to noise ratio of the sequence of feature vectors of the speech.

11. The method according to claim 10,
**characterized in that** the step of providing compensation is carried out by providing compensation in accordance with the sequence of feature vectors, the utterance environment noise model, and the clean speech model.

12. The method according to claim 10,
**characterized in that** the step of providing compensation is carried out by allowing a compensation model for compensating a noise level upon the adaptation to compensate an adaptive parameter calculated using the utterance environment noise model and the initial noise model at the time of the adaptation.

13. The method according to any of claims 10 to 12,
**characterized in that** the step of providing compensation produces:
- a differential vector by determining a difference between the sequence of feature vectors to be checked and the utterance environment noise model; and
- the compensation model by determining a difference between the clean speech model corresponding to the adaptive model to be checked and the differential vector.

14. The method according to any of claims 10 to 13,
**characterized in that** the step of providing compensation produces the compensation model for making a signal to noise ratio of the adaptive model equal to a signal to noise ratio of the sequence of feature vectors.

15. The method according to any of claims 10 to 14,
**characterized in that** the step of providing compensation comprises the following steps:
- detecting a feature vector of a vowel from the sequence of feature vectors to be checked;
- producing the differential vector by determining a difference between the feature vector detected by the step of detecting the feature vector and the utterance environment noise model; and
- producing the compensation model by determining a difference between the clean speech model corresponding to the vowel and the differential vector.

16. The method according to any of claims 10 to 14,
**characterized in that** the step of providing compensation comprises the following steps:
- detecting a feature vector having a predetermined power level or more in the sequence of feature vectors to be checked;
- producing the differential vector by determining a difference between the feature vector detected in the step of detecting the feature vector and the utterance environment noise model; and
- producing the compensation model by determining a difference between the clean speech model corresponding to a feature vector having the predetermined power level or more and the differential vector.

17. The method according to any of claims 10 to 16,
**characterized in that** the step of providing compensation comprises the following steps:
- determining an average of the compensation models generated in a predetermined period; and
- delivering an averaged compensation model.

18. The method according to any of claims 10 to 17,
**characterized in that** the step of providing compensation comprises the following steps:
- determining an average of a plurality of compensation models determined in accordance with a plurality of uttered voices; and
- delivering an averaged compensation model.

## Patentansprüche

1. Spracherkennungssystem zum Ausführen einer Spracherkennung, wobei das Spracherkennungssystem folgendes aufweist:
- einen Erzeugungsbereich (101) für ein sauberes Sprachmodell, um ein sauberes Sprachmodell rauschfreier Sprache zu speichern;
- einen Erzeugungsbereich (102) für ein ursprüngliches Rauschmodell, um ein ursprüngliches Rauschmodell zu speichern, das auf der Basis von vorab geschätztem Rauschen einer Betriebsumgebung erzeugt wird,
- einen Erzeugungsbereich (103) für ein ursprüngliches synthetisiertes Modell, um ein ursprüngliches synthetisiertes Modell zu erzeugen, indem das ursprüngliche Rauschmodell und das saubere Sprachmodell miteinander kombiniert werden,
- einen akustischen Verarbeitungsbereich (107) zum Umwandeln von Sprachdaten, die Rauschen beinhalten, in eine Sequenz von Merkmalsvektoren im Cepstrumbereich,
- einen Erzeugungsbereich (109) für Äußerungs-Umgebungsrauschen, um die Sequenz von Merkmalsvektoren während äußerungsfreier Perioden zu verarbeiten, um ein Äußerungsumgebungs-Rauschmodell zu erzeugen,
- einen Erzeugungsbereich (110) für ein adaptives Modell, um ein adaptives Model in Abhängigkeit von dem Äußerungsumgebungs-Rauschmodell, dem ursprünglichen Rauschmodell und dem ursprünglichen synthetisierten Modell zu erzeugen, und
- einen Erkennungsprozeßbereich (112) zum Überprüfen der Sequenz von Merkmalsvektoren der Sprachdaten gegenüber einer Sequenz von Merkmalsvektoren des adaptiven Modells und zum Ausgeben eines Erkennungsresultats,
**gekennzeichnet durch**
eine Kompensationseinrichtung (104) zum Schaffen einer Kompensation in Abhängigkeit von der Sequenz von Merkmalsvektoren der Sprachdaten nach der Erzeugung des adaptiven Modells, wobei die Kompensationseinrichtung (104) eine derartige Kompensation vornimmt, daß ein Signal-Rausch-Verhältnis des adaptiven Modells gleich einem Signal-Rausch-Verhältnis der Sequenz von Merkmalsvektoren der Sprachdaten wird.

2. System nach Anspruch 1,
**dadurch gekennzeichnet,**
**daß** die Kompensationseinrichtung (104) eine Kompensation in Abhängigkeit von der Sequenz der Merkmalsvektoren, dem Äußerungsumgebungs-Rauschmodell und dem sauberen Sprachmodell vornimmt.

3. System nach Anspruch 1,
**dadurch gekennzeichnet,**
**daß** die Kompensationseinrichtung (104) einem Kompensationsmodell zum Kompensieren eines Rauschpegels nach der Adaption die Kompensation eines adaptiven Parameters ermöglicht, der unter Verwendung des Äußerungsumgebungs-Rauschmodells und des ursprünglichen Rauschmodells zum Zeitpunkt der Adaption berechnet worden ist.

4. System nach einem der Ansprüche 1 bis 3,
**dadurch gekennzeichnet,**
**daß** die Kompensationseinrichtung (104) folgendes erzeugt:
- einen Differenzvektor durch Bestimmen einer Differenz zwischen der zu prüfenden Sequenz von Merkmalsvektoren und dem Äußerungsumgebungs-Rauschmodell; und
- das Kompensationsmodell, und zwar durch Bestimmen einer Differenz zwischen dem sauberen Sprachmodell, das dem zu prüfenden adaptiven Modell entspricht, und dem Differenzvektor.

5. System nach einem der Ansprüche 1 bis 3,
**dadurch gekennzeichnet,**
**daß** die Kompensationseinrichtung (104) das Kompensationsmodell erzeugt, um ein Signal-Rausch-Verhältnis des adaptiven Modells gleich einem Signal-Rausch-Verhältnis der Sequenz von Merkmalsvektoren zu machen.

6. System nach einem der Ansprüche 1 bis 5,
**dadurch gekennzeichnet,**
**daß** die Kompensationseinrichtung (104) eine Detektionseinrichtung (401) aufweist, um einen Merkmalsvektor eines Vokals aus der zu prüfenden Sequenz von Merkmalsvektoren zu detektieren und den Differenzvektor durch Bestimmen einer Differenz zwischen dem von der Detektionseinrichtung (401) detektierten Merkmalsvektor und dem Äußerungsumgebungs-Rauschmodell zu erzeugen sowie das Kompensationsmodell durch Bestimmen einer Differenz zwischen dem dem Vokal entsprechenden sauberen Sprachmodell und dem Differenzvektor zu erzeugen.

7. System nach einem der Ansprüche 1 bis 5,
**dadurch gekennzeichnet,**
**daß** die Kompensationseinrichtung (104) eine Detektionseinrichtung (401) aufweist, um einen Merkmalsvektor mit einem vorbestimmten Energiepegel oder einem darüber liegenden Pegel in der zu prüfenden Sequenz von Merkmalsvektoren zu detektieren, den Differenzvektor durch Bestimmen einer Differenz zwischen dem von der Detektionseinrichtung (401) detektierten Merkmalsvektor und dem Äußerungsumgebungs-Rauschmodell zu erzeugen sowie das Kompensationsmodell durch Bestimmen einer Differenz zwischen dem sauberen Sprachmodell, das einem Merkmalsvektor mit dem vorbestimmten Energiepegel oder einem darüber liegenden Pegel entspricht, und dem Differenzvektor zu erzeugen.

8. System nach einem der Ansprüche 1 bis 7,
**dadurch gekennzeichnet,**
**daß** die Kompensationseinrichtung (104) eine Berechnungseinrichtung (407) aufweist, um einen Durchschnitt der in einer vorbestimmten Periode erzeugten Kompensationsmodelle zu ermitteln und ein durch die Berechnungseinrichtung (407) geschaffenes, gemitteltes Kompensationsmodell zu liefern.

9. System nach einem der Ansprüche 1 bis 8,
**dadurch gekennzeichnet,**
**daß** die Kompensationseinrichtung (104) eine Berechnungseinrichtung (407) aufweist, um einen Durchschnitt aus einer Vielzahl von Kompensationsmodellen zu ermitteln, die in Abhängigkeit von einer Vielzahl von Sprachäußerungen ermittelt werden, und um ein durch die Berechnungseinrichtung (407) geschaffenes, gemitteltes Kompensationsmodell zu liefern.

10. Spracherkennungsverfahren, das folgende Schritte aufweist,
- Bereitstellen eines ursprünglichen Rauschmodells, das auf der Basis eines vorab geschätzten Rauschens einer Betriebsumgebung erzeugt wird, eines sauberen Sprachmodells von rauschfreier Sprache sowie eines ursprünglichen, synthetisierten Modells, das durch Kombinieren des ursprünglichen Rauschmodells und des sauberen Sprachmodells erzeugt wird;
- Erzeugen eines Äußerungsumgebungs-Rauschmodells aus einem Hintergrundrauschen in der Betriebsumgebung bei der Spracherkennung;
- Erzeugen einer Sequenz von Merkmalsvektoren aus mit Rauschen überlagerter Sprache, die eine Stimmäußerung und das Hintergrundrauschen beinhaltet;
- Erzeugen eines adaptiven Modells durch Adaptieren des ursprünglichen synthetisierten Modells unter Verwendung des Äußerungsumgebungs-Rauschmodells und des ursprünglichen Rauschmodells; und
- Überprüfen des adaptiven Modells gegenüber der Sequenz von Merkmalsvektoren der Sprache, um eine Spracherkennung auszuführen,
**dadurch gekennzeichnet,**
**daß** der Schritt des Erzeugens des adaptiven Modells den Schritt beinhaltet, in dem eine Kompensation in Abhängigkeit von der Sequenz von Merkmalsvektoren der Sprache ausgeführt wird,
und **daß** die Kompensation ein Signal-Rausch-Verhältnis des adaptiven Modells gleich einem Signal-Rausch-Verhältnis der Sequenz von Merkmalsvektoren der Sprache macht.

11. Verfahren nach Anspruch 10,
**dadurch gekennzeichnet,**
**daß** der Schritt des Ausführens einer Kompensation vorgenommen wird, indem eine Kompensation in Abhängigkeit von der Sequenz von Merkmalsvektoren, dem Äußerungsumgebungs-Rauschmodell und dem sauberen Sprachmodell ausgeführt wird.

12. Verfahren nach Anspruch 1,
**dadurch gekennzeichnet,**
**daß** der Schritt des Ausführens einer Kompensation vorgenommen wird, indem man einem Kompensationsmodell zum Kompensieren eines Rauschpegels nach der Adaption eine Kompensation eines adaptiven Parameters ermöglicht, der unter Verwendung des Äußerungsumgebungs-Rauschmodells sowie des ursprünglichen Rauschmodells zum Zeitpunkt der Adaption berechnet worden ist.

13. Verfahren nach einem der Ansprüche 10 bis 12,
**dadurch gekennzeichnet,**
**daß** der Schritt der Ausführung einer Kompensation folgendes erzeugt:
- einen Differenzvektor durch Bestimmen einer Differenz zwischen der zu prüfenden Sequenz von Merkmalsvektoren und dem Äußerungsumgebungs-Rauschmodell; und
- das Kompensationsmodell, und zwar durch Bestimmen einer Differenz zwischen dem sauberen Sprachmodell, das dem zu prüfenden adaptiven Modell entspricht, und dem Differenzvektor.

14. Verfahren nach einem der Ansprüche 10 bis 13,
**dadurch gekennzeichnet,**
**daß** der Schritt der Ausführung einer Kompensation das Kompensationsmodell erzeugt, um ein Signal-Rausch-Verhältnis des adaptiven Modells gleich einem Signal-Rausch-Verhältnis der Sequenz von Merkmalsvektoren zu machen.

15. Verfahren nach einem der Ansprüche 10 bis 14,
**dadurch gekennzeichnet,**
**daß** der Schritt der Ausführung einer Kompensation folgende Schritte beinhaltet:
- Detektieren eines Merkmalsvektors eines Vokals aus der zu prüfenden Sequenz von Merkmalsvektoren;
- Erzeugen des Differenzvektors durch Bestimmen einer Differenz zwischen dem Merkmalsvektor, der durch den Schritt zum Detektieren des Merkmalsvektors detektiert worden ist, und dem Äußerungsumgebungs-Rauschmodell; und
- Erzeugen des Kompensationsmodells durch Bestimmen einer Differenz zwischen dem dem Vokal entsprechenden sauberen Sprachmodell und dem Differenzvektor.

16. Verfahren nach einem der Ansprüche 10 bis 14,
**dadurch gekennzeichnet,**
**daß** der Schritt der Ausführung einer Kompensation folgende Schritte beinhaltet:
- Detektieren eines Merkmalsvektors mit einem vorbestimmten Energiepegel oder einem darüber liegenden Pegel in der zu prüfenden Sequenz von Merkmalsvektoren;
- Erzeugen des Differenzvektors durch Bestimmen einer Differenz zwischen dem Merkmalsvektor, der in dem Schritt zum Detektieren des Merkmalsvektors detektiert worden ist, und dem Äußerungsumgebungs-Rauschmodell; und
- Erzeugen des Kompensationsmodells durch Bestimmen einer Differenz zwischen dem sauberen Sprachmodell, das einem Merkmalsvektor mit dem vorbestimmten Energiepegel oder einem darüber liegenden Pegel entspricht, und dem Differenzvektor.

17. Verfahren nach einem der Ansprüche 10 bis 16,
**dadurch gekennzeichnet,**
**daß** der Schritt der Ausführung einer Kompensation folgende Schritte beinhaltet:
- Bestimmen eines Durchschnitts der in einer vorbestimmten Periode erzeugten Kompensationsmodelle; und
- Liefern eines gemittelten Kompensationsmodells.

18. Verfahren nach einem der Ansprüche 10 bis 17,
**dadurch gekennzeichnet,**
**daß** der Schritt der Ausführung einer Kompensation folgende Schritte beinhaltet:
- Bestimmen eines Durchschnitts aus einer Vielzahl von Kompensationsmodellen, die in Abhängigkeit von einer Vielzahl von Sprachäußerungen bestimmt werden; und
- Liefern eines gemittelten Kompensationsmodells.

## Revendications

1. Système de reconnaissance vocale pour effectuer une reconnaissance vocale, comprenant:
- une partie génératrice de modèle vocal net (101) pour stocker un modèle vocal net sans bruit,
- une partie génératrice de modèle de bruit initial (102) pour stocker un modèle de bruit initial produit sur la base d'un bruit préalablement évalué d'une ambiance de service,
- une partie génératrice de modèle synthétisé initial (103) pour produire un modèle synthétisé initial en combinant le modèle de bruit initial et le modèle vocal net,
- une partie de traitement acoustique (107) pour convertir des données vocales comprenant un bruit en une séquence de vecteurs de caractéristiques de domaine cepstral,
- une partie génératrice de modèle de bruit ambiant d'expressions vocales (109) pour produire la séquence de vecteurs de caractéristiques en l'absence d'expressions vocales pour générer un modèle de bruit ambiant d'expressions vocales,
- une partie génératrice de modèle adaptatif (110) pour générer un modèle adaptatif selon le modèle de bruit ambiant d'expressions vocales, le modèle de bruit initial et le modèle synthétisé initial, et
- une partie de traitement de reconnaissance (112) pour vérifier la séquence de vecteurs de caractéristiques des données vocales contre une séquence de vecteurs de caractéristiques du modèle adaptatif et délivrer un résultat de reconnaissance,
**caractérisé par** des moyens de compensation (104) pour assurer une compensation selon la séquence de vecteurs de caractéristiques des données vocales lors de la production du modèle adaptatif,
- dans lequel les moyens de compensation (104) assurent une compensation pour produire un rapport signal/bruit du modèle adaptatif égal à un rapport signal/bruit de la séquence des vecteurs de caractéristiques des données vocales.

2. Système selon la revendication 1,
**caractérisé en ce que** les moyens de compensation (104) assurent une compensation selon la séquence de vecteurs de caractéristiques, le modèle de bruit ambiant d'expressions vocales et le modèle vocal net.

3. Système selon la revendication 1,
**caractérisé en ce que** les moyens de compensation (104) permettent à un modèle de compensation pour compenser le niveau de bruit lors de l'adaptation de compenser un paramètre adaptatif calculé à l'aide du modèle de bruit ambiant d'expressions vocales et du modèle de bruit initial au moment de l'adaptation.

4. Système selon l'une quelconque des revendications 1 à 3,
**caractérisé en ce que** les moyens de compensation (104) produisent:
- un vecteur différentiel en déterminant une différence entre la séquence de vecteurs de caractéristiques à vérifier et le modèle de bruit ambiant d'expressions vocales; et
- le modèle de compensation en déterminant une différence entre le modèle vocal net correspondant au modèle adaptatif à vérifier et le vecteur différentiel.

5. Système selon l'une quelconque des revendications 1 à 4,
**caractérisé en ce que** les moyens de compensation (104) produisent le modèle de compensation pour produire un rapport signal/bruit du modèle adaptatif égal à un rapport signal/bruit de la séquence de vecteurs de caractéristiques.

6. Système selon l'une quelconque des revendications 1 à 5,
**caractérisé en ce que** les moyens de compensation (104) comprennent des moyens de détection (401) pour détecter un vecteur de caractéristiques d'une voyelle dans la séquence de vecteurs de caractéristiques à vérifier, produisent le vecteur différentiel en déterminant une différence entre le vecteur de caractéristiques détecté par les moyens de détection (401) et le modèle de bruit ambiant d'expressions vocales, et produisent le modèle de compensation en déterminant une différence entre le modèle vocal net correspondant à la voyelle et le vecteur différentiel.

7. Système selon l'une quelconque des revendications 1 à 5,
**caractérisé en ce que** les moyens de compensation (104) comprennent des moyens de détection (401) pour détecter un vecteur de caractéristiques ayant un niveau de puissance prédéterminé ou plus dans la séquence de vecteurs de caractéristiques à vérifier, produisent le vecteur différentiel en déterminant une différence entre le vecteur de caractéristiques détecté par les moyens de détection (401) et le modèle de bruit ambiant d'expressions vocales, et produisent le modèle de compensation en déterminant une différence entre le modèle vocal net correspondant à un vecteur de caractéristiques ayant le niveau de puissance prédéterminé ou plus et le vecteur différentiel.

8. Système selon l'une quelconque des revendications 1 à 7,
**caractérisé en ce que** les moyens de compensation (104) comprennent des moyens de calcul (407) pour déterminer une moyenne des modèles de compensation générés dans une période prédéterminée, et délivrent un modèle de compensation moyen fourni par les moyens de calcul (407).

9. Système selon l'une quelconque des revendications 1 à 8,
**caractérisé en ce que** les moyens de compensation (104) comprennent des moyens de calcul (407) pour déterminer une moyenne d'une pluralité de modèles de compensation déterminés selon une pluralité de voix exprimées, et délivrent un modèle de compensation moyen fourni par les moyens de calcul (407).

10. Procédé de reconnaissance vocale, comprenant les étapes suivantes:
- fournir un modèle de bruit initial produit en se basant sur le bruit préalablement évalué d'une ambiance de service, un modèle vocal net de paroles sans bruit et un modèle synthétisé initial produit en combinant le modèle de bruit initial et le modèle vocal net;
- produire un modèle de bruit ambiant d'expressions vocales à partir du bruit de fond de l'ambiance de service lors de la reconnaissance vocale;
- produire une séquence de vecteurs de caractéristiques à partir de paroles superposées à du bruit, comprenant une voix exprimée et le bruit de fond;
- produire un modèle adaptatif en adaptant le modèle synthétisé initial à l'aide du modèle de bruit ambiant d'expressions vocales et du modèle de bruit initial; et
- vérifier le modèle adaptatif contre la séquence de vecteurs de caractéristiques des paroles pour effectuer une reconnaissance vocale,
**caractérisé en ce que** l'étape de production du modèle adaptatif comprend l'étape visant à fournir une compensation selon la séquences de vecteurs de caractéristiques des paroles,
et **en ce que** la compensation égalise un rapport signal/bruit du modèle adaptatif au rapport signal/bruit de la séquence de vecteurs de caractéristiques des paroles.

11. Procédé selon la revendication 10,
**caractérisé en ce que** l'étape fournissant une compensation est effectuée en assurant une compensation selon la séquence de vecteurs de caractéristiques, le modèle de bruit ambiant d'expressions vocales et le modèle vocal net.

12. Procédé selon la revendication 10,
**caractérisé en ce que** l'étape fournissant une compensation est effectuée pour permettre à un modèle de compensation de compenser un niveau de bruit lors de l'adaptation pour compenser un paramètre adaptatif calculé à l'aide du modèle de bruit ambiant d'expressions vocales et du modèle de bruit initial au moment de l'adaptation.

13. Procédé selon l'une quelconque des revendications 10 à 12,
**caractérisé en ce que** l'étape fournissant une compensation produit:
- un vecteur différentiel en déterminant une différence entre la séquence de vecteurs de caractéristiques à vérifier et le modèle de bruit ambiant d'expressions vocales; et
- le modèle de compensation en déterminant une différence entre le modèle vocal net correspondant au modèle adaptatif à vérifier et le vecteur différentiel.

14. Procédé selon l'une quelconque des revendications 10 à 13,
**caractérisé en ce que** l'étape fournissant une compensation produit le modèle de compensation pour égaler un rapport signal/bruit du modèle adaptatif à un rapport signal/bruit de la séquence de vecteurs de caractéristiques.

15. Procédé selon l'une quelconque des revendications 10 à 14,
**caractérisé en ce que** l'étape fournissant une compensation comprend les étapes suivantes:
- détecter un vecteur de caractéristiques d'une voyelle à partir de la séquence de vecteurs de caractéristiques à vérifier;
- produire le vecteur différentiel en déterminant une différence entre le vecteur de caractéristiques détecté par l'étape de détection du vecteur de caractéristiques et le modèle de bruit ambiant d'expressions vocales; et
- produire le modèle de compensation en déterminant une différence entre le modèle vocal net correspondant à la voyelle et le vecteur différentiel.

16. Procédé selon l'une quelconque des revendications 10 à 14,
**caractérisé en ce que** l'étape fournissant une compensation comprend les étapes suivantes:
- détecter un vecteur de caractéristiques ayant un niveau de puissance prédéterminé ou plus dans la séquence de vecteurs de caractéristiques à vérifier;
- produire le vecteur de différentiel en déterminant une différence entre le vecteur de caractéristiques détecté à l'étape de détection du vecteur de caractéristiques et le modèle de bruit ambiant d'expressions vocales; et
- produire le modèle de compensation en déterminant une différence entre le modèle vocal net correspondant à un vecteur de caractéristiques ayant le niveau de puissance prédéterminé ou plus et le vecteur différentiel.

17. Procédé selon l'une quelconque des revendications 10 à 16,
**caractérisé en ce que** l'étape fournissant une compensation comprend les étapes suivantes:
- déterminer une moyenne des modèles de compensation générés dans une période prédéterminée; et
- délivrer un modèle de compensation moyen.

18. Procédé selon l'une quelconque des revendications 10 à 17,
**caractérisé en ce que** l'étape fournissant une compensation comprend les étapes suivantes:
- déterminer une moyenne d'une pluralité de modèles de compensation déterminés avec une pluralité de voix exprimées; et
- délivrer un modèle de compensation moyen.
